# EUROPEAN PATENT SPECIFICATION

(11) **EP 4 438 582 B1**
(45) Date of publication and mention of the grant of the patent: **24.09.2025**
(21) Application number: 23904806.9
(22) Date of filing: 30.08.2023
(51) Int. Cl.: C04B 41/87, A24F 40/70, C04B 41/45

(54) **USE OF A CERAMIC HEATING SHEET FOR HEATING CIGARETTES TO PREVENT TAR-LIKE OIL GELATINIZATION AND SINTERING**
VERWENDUNG EINES KERAMISCHEN HEIZBLATTES ZUM ERHITZEN VON ZIGARETTEN ZUR VERHINDERUNG DER VERKLEISTERUNG UND VERSINTERUNG VON TEERARTIGEM ÖL
UTILISATION D'UNE FEUILLE CHAUFFANTE EN CÉRAMIQUE POUR CHAUFFER LES CIGARETTES AFIN D'ÉVITER LA GÉLATINISATION ET LE FRITTAGE DE L'HUILE DE GOUDRON

(30) Priority: 29.08.2023 CN 202311096826
(43) Date of publication of application: 02.10.2024
(73) Proprietor: CHINA TOBACCO YUNNAN INDUSTRIAL CO., LTD, Wuhua District Kunming Yunnan 650231 (CN)
(72) Inventor: LI, Tinghua, Kunming Yunnan 650231 (CN); YOU, Junheng, Kunming Yunnan 650231 (CN); LIU, Yupeng, Kunming Yunnan 650231 (CN); LI, Zhiqiang, Kunming Yunnan 650231 (CN); LI, Shoubo, Kunming Yunnan 650231 (CN); ZHU, Donglai, Kunming Yunnan 650231 (CN); QIN, Yunhua, Kunming Yunnan 650231 (CN); WANG, Daoai, Kunming Yunnan 650231 (CN); SHANG, Shanzhai, Kunming Yunnan 650231 (CN); ZHANG, Xia, Kunming Yunnan 650231 (CN); GONG, Weimin, Kunming Yunnan 650231 (CN); HONG, Liu, Kunming Yunnan 650231 (CN); TIAN, Yongfeng, Kunming Yunnan 650231 (CN)
(74) Representative: Gille Hrabal Partnerschaftsgesellschaft mbB Patentanwälte
(86) International application number: PCT/CN2023/115635
(87) International publication number: WO 2024/152568

(56) References cited:
- CN-A- 105 347 690
- CN-A- 106 422 557
- CN-A- 107 986 815
- CN-A- 110 558 618
- CN-A- 111 407 001
- CN-A- 111 943 636
- CN-U- 212 185 121
- CN-U- 214 386 079
- KR-A- 20100 008 934
- KR-A- 20110 032 688

## Description

### TECHNICAL FIELD

The present invention belongs to the technical field of tobacco, and particularly relates to a use of a ceramic heating sheet for heating cigarettes to prevent tar-like oil gelatinization and sintering.

### BACKGROUND

Heated cigarettes are originally developed by foreign tobacco companies such as Philip Morris International, wherein special cigarettes are loaded into a heating apparatus, and nicotine and smoke are released from the cigarettes by low-temperature baking at a temperature of about 300°C, which is much lower than the combustion temperature of conventional cigarettes being 800°C or above. Studies have shown that the content of carcinogens in smoke of the heated cigarettes is less than that of ordinary cigarettes, which reduces the intake of mutagens by smokers and greatly reduces the harm of tobacco products to the human body. The heated cigarettes have gradually become a new trend leading the healthy consumption of tobacco.

CN 105 347 690 A relates to a transparent and superhydrophobic repairable coating material consisting of a three-dimensional hollow network coating bonded to a substrate and a low surface energy material filled in the void. CN 111 407 001 A relates to a composite wave generating element comprising an electrothermal material layer and a carbon material layer compounded together.

The heated cigarettes employ heating elements such as a ceramic heating sheet to heat cigarette cores so that volatile components thereof are converted into an aerosol, which is then used by smoking. It is usually easy for tar-like oil that are volatilized from the cigarette cores and condensed into a liquid to adhere to the surface of the ceramic heating sheet as a heating element. The tar-like oil coagulates on the surface of the ceramic heating sheet, and when the heating sheet is heated again, the tar-like oil is heated again. The proportion of components with a high boiling point in an adhesive substance increases gradually after several times of heating and cooling, and when the components are further crosslinked under the action of high temperature, they are gradually gelatinized on the surface of the heating sheet, which affects the use of the ceramic heating sheet. Therefore, gelatinized substances will be formed on the surface after the ceramic heating sheet is used for a period of time, and these gelatinized substances no longer have thermal volatility, are adhered to the surface of the heating sheet, and are removed mainly by physical and mechanical forces.

To solve the above problems, the present invention is proposed.

### SUMMARY

The present document discloses a ceramic heating sheet, wherein a surface of the ceramic sheet is provided with a three-dimensional foam structure layer of silica nanotubes having a thickness of 1-8 µm. The present document further discloses a preparation method for the ceramic heating sheet and use of the ceramic heating sheet. The claimed invention is a use of the ceramic heating sheet as defined in the appended claims. The ceramic heating sheet of the present invention has a function of preventing tar-like oil gelatinization and sintering.

The technical solutions of the present document are as follows:
in a first aspect which is not according to the claimed invention, the present document discloses a ceramic heating sheet, wherein a surface of the ceramic sheet is provided with a three-dimensional foam structure layer of silica nanotubes, the three-dimensional foam structure layer of silica nanotubes having a thickness of 1-8 µm.

Preferably, a contact angle of tar-like oil to the ceramic heating sheet is greater than 152°, and an adhesion amount of the tar-like oil on the surface of the ceramic heating sheet is lower than 0.3 wt%.

Preferably, nanotubes in the three-dimensional foam structure layer of silica nanotubes have a diameter of 10-500 nm.

In a second aspect which is not according to the claimed invention, the present document discloses a preparation method for the ceramic heating sheet, including the steps of:
(1) laying a layer of an aqueous solution of polyaniline nanowires on a surface of a ceramic sheet, and removing water by heating;
(2) putting the ceramic sheet obtained in the step (1) into a closed container containing a silicon-containing gel and ammonia gas for deposition of silica nanoparticles, and performing treatment at a certain temperature for a period of time to obtain a surface-deposited ceramic sheet; and
(3) performing high-temperature heat treatment on the surface-deposited ceramic sheet obtained in the step (2) for a period of time to obtain the ceramic heating sheet with a three-dimensional foam structure layer of silica nanotubes.

Preferably, a method for preparing the aqueous solution of polyaniline nanowires in the step (1) includes: adding aniline into deionized water, then sequentially adding a certain amount of perchloric acid and ammonium persulfate, and performing mixing for a period of time.

Preferably, the aqueous solution of aniline has a concentration of 0.5-1.5 wt%, perchloric acid has a concentration of 0.5-1.5 wt%, and ammonium persulfate has a concentration of 1.0-1.5 wt%; and the mixing time is not less than 10 h.

Preferably, a method for preparing the silicon-containing gel in the step (2) includes: adding a small amount of hydrochloric acid into an ethanol solution of silane, carrying out a reaction at room temperature, and then performing aging for a period of time to obtain the silicon-containing gel; and the treatment is performed at room temperature to 180°C for 12 h-36 h to obtain the surface-deposited ceramic sheet.

Preferably, the silane is one or more of methyltriethoxysilane, dimethyldiethoxysilane, perfluorodecyltriethoxysilane or perfluorooctyltriethoxysilane.

Preferably, the high-temperature heat treatment in the step (3) is performed at 500-800°C for 4-10 h.

A third aspect representing the present invention relates to a use of the ceramic heating sheet for heating cigarettes to prevent tar-like oil gelatinization and sintering.

The beneficial effects of the present invention are as follows:
1. The ceramic heating sheet of the present invention has a three-dimensional foam structure layer of silica nanotubes having a thickness of 1-8 µm on the surface thereof, the contact angle of tar-like oil to the obtained ceramic heating sheet is greater than 152°, and the adhesion amount of the tar-like oil on the surface of the ceramic heating sheet is lower than 0.3 wt%.
2. The preparation method for the ceramic heating sheet of the present invention is simple.

### DETAILED DESCRIPTION

The present invention is further described in detail below by means of specific embodiments, but it should not be understood that the scope of the present invention is limited to the following examples. Various replacements and modifications made according to the general technical knowledge and conventional means in the art without departing from the idea of the present invention are intended to be included within the scope of the present invention.

Example 1: Preparation of a ceramic heating sheet with a three-dimensional foam structure layer of silica nanotubes on the surface, including the following steps:
(1) Preparation of an aqueous solution of polyaniline nanowires: 0.9 mL of aniline was added into 100 mL of deionized water which was stirred, and 1 g of perchloric acid and 1.2 g of ammonium persulfate were then sequentially added, and stirring was performed for 24 h, wherein the concentration of the aqueous solution of polyaniline nanowires was 0.9%; and a layer of the obtained aqueous solution of polyaniline nanowires was laid on the surface of a ceramic heating sheet;
(2) the ceramic sheet obtained in the step (1) was put into a closed container containing a silicon-containing gel and ammonia gas for deposition of silica nanoparticles for a period of time, and treatment was performed at 120°C for 24 h to obtain a surface-deposited ceramic sheet, wherein a method for preparing the silicon-containing gel included adding 0.1 ml of 1M hydrochloric acid into 200 ml of an ethanol solution of 2 ml of methyltriethoxysilane and 0.2 ml of perfluorodecyltriethoxysilane, a reaction was carried out at room temperature for 24 h, and then aging was performed for 96 h to obtain the silicon-containing gel; and
(3) the surface-deposited ceramic sheet obtained in the step (2) was treated at 600°C for 6 h to obtain the ceramic heating sheet with the three-dimensional foam structure layer of silica nanotubes on the surface.

Evaluation results of use of the obtained ceramic heating sheet with the three-dimensional foam structure layer of silica nanotubes for heating cigarettes to prevent tar-like oil gelatinization and sintering were as follows:

| Serial number | Sample | Adhesion amount of tar-like oil after heating 100 times/% | Carbon deposition amount on surface of ceramic heating sheet after heating 100 times/% |
|---|---|---|---|
| 1 | General ceramic heating sheet | 26 | 12.5 |
| 2 | Ceramic heating sheet obtained in this example | 1.5 | 0.3 |

| | | | |
|---|---|---|---|
| [Note] Test steps of the adhesion amount of the tar-like oil were as follows: a sample was immersed into the tar-like oil for 1 minute, and taken out, and a mass of the sample was weighed before and after the sample was immersed into the tar-like oil, wherein a percentage of an excess mass after the sample was immersed into the tar-like oil in the mass of the sample was the adhesion amount of the tar-like oil. | | | |

Example 2: Preparation of a ceramic heating sheet with a three-dimensional foam structure layer of silica nanotubes on the surface, including the following steps:
(1) Preparation of an aqueous solution of polyaniline nanowires: 0.9 mL of aniline was added into 100 mL of deionized water which was stirred, and 1 g of perchloric acid and 1.2 g of ammonium persulfate were then sequentially added, and stirring was performed for 24 h, wherein the concentration of the aqueous solution of polyaniline nanowires was 0.9%; and a layer of the obtained aqueous solution of polyanline nanowires was laid on the surface of a ceramic heating plate;
(2) the ceramic sheet obtained in the step (1) was put into a closed container containing a silicon-containing gel and ammonia gas for deposition of silica nanoparticles for a period of time, and treatment was performed at 180°C for 12 h to obtain a surface-deposited ceramic sheet, wherein a method for preparing the silicon-containing gel included adding 0.1 ml of 1M hydrochloric acid into 200 ml of an ethanol solution of 2 ml of methyltriethoxysilane and 0.2 ml of perfluorodecyltriethoxysilane, a reaction was carried out at room temperature for 24 h, and then aging was performed for 96 h to obtain the silicon-containing gel; and
(3) the surface-deposited ceramic sheet obtained in the step (2) was treated at 700°C for 5 h to obtain the ceramic heating sheet with the three-dimensional foam structure layer of silica nanotubes on the surface.

Evaluation results of use of the obtained ceramic heating sheet with the three-dimensional foam structure layer of silica nanotubes for heating cigarettes to prevent tar-like oil gelatinization and sintering were similar to those of Example 1.

Example 3: Preparation of a ceramic heating sheet with a three-dimensional foam structure layer of silica nanotubes on the surface, including the following steps:
(1) Preparation of an aqueous solution of polyaniline nanowires: 0.9 mL of aniline was added into 100 mL of deionized water which was stirred, and 1 g of perchloric acid and 1.2 g of ammonium persulfate were then sequentially added, and stirring was performed for 24 h, wherein the concentration of the aqueous solution of polyaniline nanowires was 0.9%; and a layer of the obtained aqueous solution of polyaniline nanowires was laid on the surface of a ceramic heating sheet;
(2) the ceramic sheet obtained in the step (1) was put into a closed container containing a silicon-containing gel and ammonia gas for deposition of silica nanoparticles for a period of time, and treatment was performed at room temperature for 36 h to obtain a surface-deposited ceramic sheet, wherein a method for preparing the silicon-containing gel included adding 0.1 ml of 1M hydrochloric acid into 200 ml of an ethanol solution of 2 ml of methyltriethoxysilane and 0.2 ml of perfluorodecyltriethoxysilane, a reaction was carried out at room temperature for 24 h, and then aging was performed for 96 h to obtain the silicon-containing gel; and
(3) the surface-deposited ceramic sheet obtained in the step (2) was treated at 700°C for 5 h to obtain the ceramic heating sheet with the three-dimensional foam structure layer of silica nanotubes on the surface.

Evaluation results of use of the obtained ceramic heating sheet with the three-dimensional foam structure layer of silica nanotubes for heating cigarettes to prevent tar-like oil gelatinization and sintering were similar to those of Example 1.

The examples are only preferred examples of the present invention and are not intended to limit the present invention, and for those skilled in the art, various changes and variations can be made to the present invention.

## Claims

1. Use of a ceramic heating sheet for heating cigarettes to prevent tar-like oil gelatinization and sintering, the ceramic heating sheet having a surface provided with a three-dimensional foam structure layer of silica nanotubes, the three-dimensional foam structure layer of silica nanotubes having a thickness of 1-8 µm.

2. The use according to claim 1, **characterized in that** a contact angle of tar-like oil to the ceramic heating sheet is greater than 152°, and an adhesion amount of the tar-like oil on the surface of the ceramic heating sheet is lower than 0.3 wt%.

3. The use according to claim 1, **characterized in that** nanotubes in the three-dimensional foam structure layer of silica nanotubes have a diameter of 10-500 nm.

## Patentansprüche

1. Verwendung einer keramischen Heizfolie zum Erhitzen von Zigaretten, um Gelatinierung und Sintern von teerartigem Öl zu verhindern, wobei die keramische Heizfolie eine Oberfläche aufweist, die mit einer dreidimensionalen Schaumstrukturschicht aus Siliziumdioxid-Nanoröhren versehen ist, wobei die dreidimensionale Schaumstrukturschicht aus Siliziumdioxid-Nanoröhren eine Dicke von 1 bis 8 µm aufweist.

2. Die Verwendung gemäß Anspruch 1, **dadurch gekennzeichnet, dass** ein Kontaktwinkel von teerartigem Öl zu der keramischen Heizfolie größer als 152° ist und eine Anhaftmenge des teerartigen Öls auf der Oberfläche der keramischen Heizfolie geringer als 0,3 Gew.-% ist.

3. Die Verwendung gemäß Anspruch 1, **dadurch gekennzeichnet, dass** die Nanoröhren in der dreidimensionalen Schaumstrukturschicht aus Siliziumdioxid-Nanoröhren einen Durchmesser von 10 bis 500 nm aufweisen.

## Revendications

1. Utilisation d'une feuille chauffante en céramique pour chauffer des cigarettes afin d'empêcher la gélatinisation et le frittage de l'huile semblable à du goudron, la feuille chauffante en céramique ayant une surface pourvue d'une couche à structure de mousse tridimensionnelle de nanotubes de silice, la couche à structure de mousse tridimensionnelle de nanotubes de silice ayant une épaisseur de 1 à 8 µm.

2. Utilisation selon la revendication 1, **caractérisée en ce qu'**un angle de contact de l'huile semblable à du goudron avec la feuille chauffante en céramique est supérieur à 152°, et une quantité d'adhérence de l'huile semblable à du goudron sur la surface de la feuille chauffante en céramique est inférieure à 0,3 % en poids.

3. Utilisation selon la revendication 1, **caractérisée en ce que** des nanotubes dans la couche à structure de mousse tridimensionnelle de nanotubes de silice ont un diamètre de 10 à 500 nm.
